# EUROPEAN PATENT APPLICATION

(11) **EP 3 447 658 A1**
(43) Date of publication of application: **27.02.2019**
(21) Application number: 16899491.1
(22) Date of filing: 21.10.2016
(51) Int. Cl.: G06F 17/30, G01C 21/36

(54) **INFORMATION PROVISION SYSTEM, INFORMATION PROVISION DEVICE, AND INFORMATION PROVISION METHOD**

(30) Priority: 21.04.2016 JP 2016084996
(71) Applicant: Clarion Co., Ltd., Saitama-shi, Saitama 330-0081 (JP)
(72) Inventor: MATSUMOTO, Takashi, Tokyo 100-8280 (JP); KONDO, Akihiro, Tokyo 100-8280 (JP); TAMAI, Yasuyuki, Tokyo 100-8280 (JP); NAGAI, Yasushi, Saitama-shi, Saitama 330-0081 (JP); TSUCHIYAMA, Megumi, Saitama-shi, Saitama 330-0081 (JP)
(74) Representative: MERH-IP Matias Erny Reichl Hoffmann Patentanwälte PartG mbB
(86) International application number: PCT/JP2016/081278
(87) International publication number: WO 2017/183220

(57) **Abstract**

It is possible to generate history information for performing destination estimation with higher accuracy.

There are provided an information providing apparatus having a voice recognition unit configured to output a speech sentence for asking a user about a destination and acquire a response voice of a user indicating the destination, and an behavior history generation unit configured to perform a search request for a destination responded by a user and generate behavior history information including a destination specified based on a search result; and a server having a destination specification unit configured to perform the search request acquired from the information providing apparatus to a search engine configured to perform an information search, and transmit a search result to the information providing apparatus.

## Description

### Technical Field

The present invention relates to an information providing system, an information providing apparatus, and an information providing method. The present invention claims the priority of Japanese Patent Application No. 2016-84996 filed on Apr. 21, 2016, and for designated countries where incorporation by reference of the literature is permitted, the content described in the application is incorporated herein by reference.

### Background Art

The paragraph [0018] of PTL 1 describes "in a car navigation system 1, reference numeral 11 is a location information detection means configured to detect information on a current position of a user's car using a GPS or the like, and reference numeral 12 is a map database that stores map information. Reference numeral 13 is a location storage determination means configured to refer to the current position detected by the location information detection means 11 and the map database 12, to determine whether or not the detected current position is a place to be stored (whether or not it is a node to be described later), reference numeral 14 is a date and time detection means configured to detect a current date and time, and reference numeral 15 is a travel information history means configured to store the current position and the current date and time detected by the date and time detection means 14 in a pair in a time-series manner when it is determined by the position storage determination means 13 that the current position is to be stored". Further, the same paragraph describes "reference numeral 16 is a travel pattern detection means configured to detect a time-series movement pattern from a history of a position and date and time information (movement information) stored in the travel information history storage means, and reference numeral 17 is a behavior prediction means configured to predict a destination of the user's car from the travel pattern detected by the travel pattern detection means 16 when a predetermined event occurs. Reference numeral 18 is an information acquisition means configured to acquire information on the destination of the user predicted by the behavior prediction means 17 from a server 2002 via a network 3, and reference numeral 19 is an information providing means configured to display to the user the information acquired by the information acquisition means 18 and the map information stored in the map database 12 on a liquid crystal display, for example".

### Citation List

### Patent Literature

PTL 1: JP 2006-215041 A

### Summary of Invention

### Technical Problem

In the information providing method described in the above-mentioned PTL 1, a destination is not explicitly indicated by the user. Therefore, there are cases where the destination cannot be estimated or an error rate of an estimation result becomes high. However, the above-mentioned PTL 1 does not take into consideration at all about avoiding a situation where a destination cannot be estimated or a situation where an error rate of the estimation result becomes high.

The present invention has been made in view of the above problems, and it is an object of the present invention to provide an information providing system capable of generating history information for performing more accurate destination estimation.

### Solution to Problem

In order to solve the above problems, the information providing system according to the present invention includes: an information providing apparatus having a voice recognition unit configured to output a speech sentence for asking a user about a destination and acquire a response voice of the user indicating the destination, and a behavior history generation unit configured to perform a search request for the destination responded by the user and generate behavior history information including a destination specified based on a search result; and a server having a destination specification unit configured to perform the search request acquired from the information providing apparatus to a search engine configured to perform an information search, and transmit the search result to the information providing apparatus.

### Advantageous Effects of Invention

According to the information providing system of the present invention, it is possible to generate history information for performing destination estimation with higher accuracy. Meanwhile, the problems, configurations, and effects other than those described above will be clarified by the description of the embodiments below.

### Brief Description of Drawings

FIG. 1 is a diagram showing an example of a schematic configuration of an information providing system according to a first embodiment.
FIG. 2 is a diagram showing an example of a hardware configuration of an on-board terminal.
FIG. 3 is a diagram showing an example of a hardware configuration of a server.
FIG. 4 is a functional block diagram showing an example of a functional configuration of the on-board terminal.
FIG. 5 is a functional block diagram showing an example of a functional configuration of the server.
FIG. 6 is a view showing an example of user information stored in a user information storage unit.
FIG. 7 is a view showing an example of terminal information stored in a terminal information storage unit.
FIG. 8 is a view showing an example of behavior history information stored in a behavior history storage unit.
FIG. 9 is a sequence diagram showing an example of a behavior history generation process.
FIG. 10 is a sequence diagram showing an example of a destination specification process.
FIG. 11 is a sequence diagram showing an example of a destination specification process according to a second embodiment.
FIG. 12 is a sequence diagram showing an example of a destination specification process according to a third embodiment.
FIG. 13 is a sequence diagram showing an example of a behavior history generation restart process according to a fourth embodiment.
FIG. 14 is a flowchart showing an example of a behavior history generation process for performing terminal authentication.

### Description of Embodiments

Hereinafter, each embodiment of the present invention will be described with reference to the drawings.

### <First Embodiment>

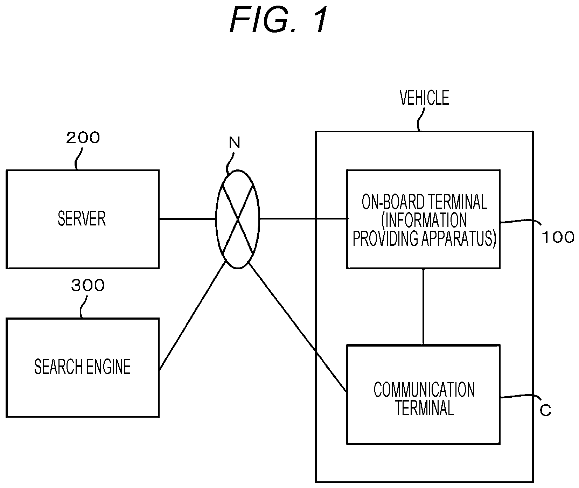

FIG. 1 is a diagram showing an example of a schematic configuration of an information providing system according to a first embodiment. The information providing system has an on-board terminal 100 that functions as an information providing apparatus, a communication terminal C, a server 200, and a search engine 300. Further, the on-board terminal 100, the communication terminal C, the server 200, and the search engine 300 are connected to each other through a predetermined communication network N such as a telephone network or the Internet network so as to communicable with each other.

The on-board terminal 100 is realized by an on-board navigation device provided with so-called navigation functions such as searching for a recommended route, route guidance, and display of map information and traffic information. Meanwhile, the on-board terminal 100 is not limited to an on-board navigation device, but may be a mobile terminal such as a smartphone or a tablet terminal installed with application software for realizing navigation functions, for example.

The on-board terminal 100 generates behavior history information including predetermined item information such as a specific destination (facility or the like) as a user's destination and a traveling route of a vehicle. In addition, the on-board terminal 100 estimates the destination toward which the user is heading, by using the past behavior history information. In addition, the on-board terminal 100 performs a search request to the server 200 for a destination that has been estimated (hereinafter referred to as "estimated destination") and an acquisition request for point of interest (POI) information on a destination inputted by the user in advance. Further, the on-board terminal 100 displays the acquired POI information on a display device. In addition, the on-board terminal 100 outputs a speech sentence for asking the user about the destination by a voice recognition function, and acquires a response voice from the user.

The communication terminal C is a device that is installed in a vehicle and provides a communication function to the on-board terminal 100. The communication terminal C is connected to the on-board terminal 100 so as to be mutually communicable through, for example, universal serial bus (USB), Bluetooth (registered trademark), or the like. Further, the communication terminal C transmits the information acquired from the on-board terminal 100 to the server 200, and transmits the information acquired from the server 200 to the on-board terminal 100. Meanwhile, the communication terminal C may be incorporated in the on-board terminal 100 in advance as a communication device of the on-board terminal 100.

The server 200 is a device to provide various services to the on-board terminal 100. Specifically, the server 200 acquires behavior history information from the on-board terminal 100 of each vehicle, and manages (stores) this behavior history information in association with the on-board terminal 100 of a transmission source. In addition, the server 200 extracts behavior history information in response to a request from the on-board terminal 100, and transmits the behavior history information to the corresponding on-board terminal 100. Further, in response to a request from the on-board terminal 100, the server 200 performs an acquisition request to the search engine 300 for POI information. Further, in response to a request from the on-board terminal 100, the server 200 performs a search request to the search engine 300 for a destination.

The search engine 300 is a system to perform an information search. Specifically, upon receiving an acquisition request for POI information, the search engine 300 searches for POI information having high relevancy with an estimated destination and the like, and transmits the POI information to the on-board terminal 100 via the server 200. Further, upon receiving the search request for a destination, the search engine 300 searches for information for specifying the destination and for the POI information, and transmits a search result to the on-board terminal 100 via the server 200.

Meanwhile, the search engine 300 may search a database in the server 200 storing predetermined information such as POI information, map information, and facility information, or may search information that is published on a web such as the Internet. Further, the search engine 300 may be provided as a part of functions of the server 200.

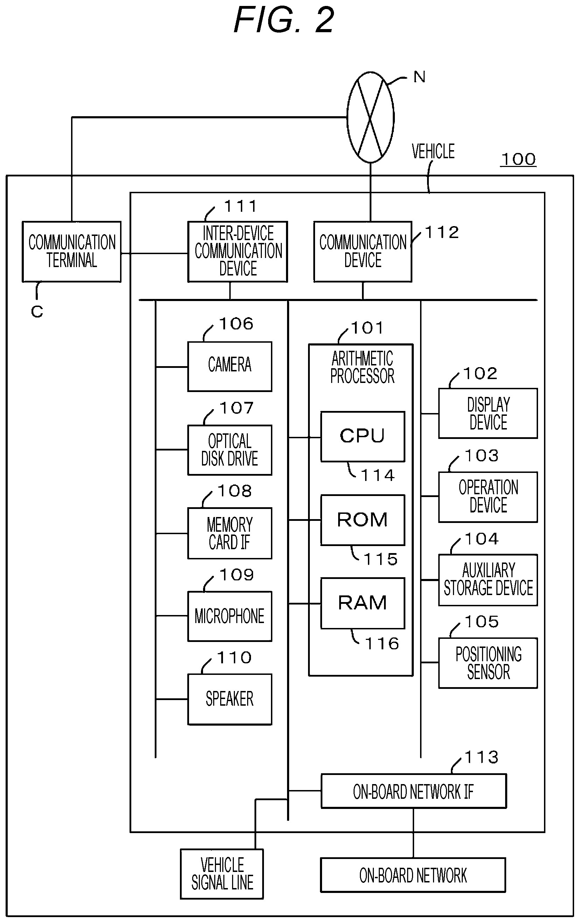

FIG. 2 is a diagram showing an example of a hardware configuration of the on-board terminal 100. The on-board terminal 100 includes an arithmetic processor 101, a display device 102, an operation device 103, an auxiliary storage device 104, a positioning sensor 105, a camera 106, an optical disk drive 107, a memory card interface (IF) 108, a microphone 109, a speaker 110, an inter-device communication device 111, a communication device 112, and an on-board network IF 113.

The arithmetic processor 101 is a main unit to execute various processes of the on-board terminal 100. Specifically, in addition to processing for realizing a predetermined navigation function, the arithmetic processor 101 performs various processes such as generation of behavior history information, estimation of a destination, and specification of a destination. Note that Details of these processes will be described later.

The arithmetic processor 101 includes a central processing unit (CPU) 114, a read only memory (ROM) 115, and a random access memory (RAM) 116. The CPU 114 is a microprocessor configured to execute various processes such as numerical calculation and control of each device. The RAM 115 is a readable/writable memory that stores calculation results, programs, and the like. The ROM 116 is a read-only memory that stores various programs to be used in the on-board terminal 100.

The display device 102 is a unit to display graphics information. The display device 102 is constituted of, for example, a liquid crystal display, an organic EL display, or the like.

The operation device 103 is a device to receive an instruction input from a user. Specifically, the operation device 103 is a keyboard, a mouse, a touch panel, a dial switch, other hard switch, or the like.

The auxiliary storage device 104 is a large capacity storage device to store a program for realizing various functions of the on-board terminal 100, such as car navigation, destination specification, or voice recognition, and to store map information and a setting file to be used for these programs. The auxiliary storage device 104 is constituted of a non-volatile storage device such as a hard disk drive (HDD), a solid state drive (SSD), or a flash memory, for example. Meanwhile, each piece of information stored in the auxiliary storage device 104 is appropriately updated according to latest information acquired from the server 200.

The positioning sensor 105 is a device to detect a location of a vehicle mounted with the on-board terminal 100, and is constituted by, for example, a vehicle speed sensor, a gyro sensor, a global positioning system (GPS) receiver, or the like.

The camera 106 is an optical device to capture and fetch an external environment of a vehicle as image information, and for example, an image sensor such as a charge-coupled device (CCD) or complementary metal oxide semiconductor (CMOS) image sensor is used.

The optical disk drive 107 is a device to read an optical disk such as a compact disk (CD: registered trademark), a digital versatile disk (DVD: registered trademark) and Blu-ray Disk (registered trademark), and read out music information and video information.

The memory card IF 108 is an interface to read from and write to a memory card such as an SD memory card (registered trademark).

The microphone 109 is a device to collect external sound of the on-board device such as a voice uttered by the user in the vehicle.

The speaker 110 is a device to output sound information generated by the arithmetic processor 101 as a sound signal.

The inter-device communication device 111 is an interface device to connect to the communication terminal C and perform information communication between with an external device (in the present embodiment, the server 200 or the like).

The communication device 112 is an on-board communication unit such as a telematics control unit (TCU), and is a device to perform information communication between with the server 200 with use of the communication network N.

The on-board network IF 113 is an interface device to connect to an on-board network and fetch information indicating a traveling state and an internal state of the vehicle. Meanwhile, the on-board terminal 100 is also connected to a vehicle signal line, and can also fetch information indicating the traveling state and the internal state of the vehicle to be inputted and outputted via the signal line.

The hardware configuration of the on-board terminal 100 has been described above.

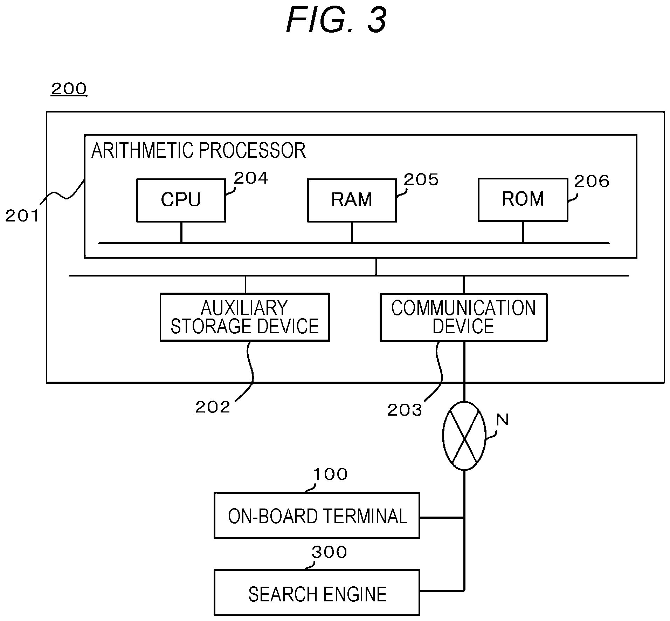

FIG. 3 is a diagram showing an example of a hardware configuration of the server 200. The server 200 has an arithmetic processor 201, an auxiliary storage device 202, and a communication device 203.

The arithmetic processor 201 is a main unit to execute various processes of the server 200. Specifically, the arithmetic processor 201 includes a CPU 204, a RAM 205, and a ROM 206, and performs predetermined processes such as management of behavior history information and a search request to the search engine 300.

The communication device 203 is a device to perform information communication between with an external device (in the present embodiment, the on-board terminal 100, the communication terminal C, and the search engine 300).

The hardware configuration of the server 200 has been described above.

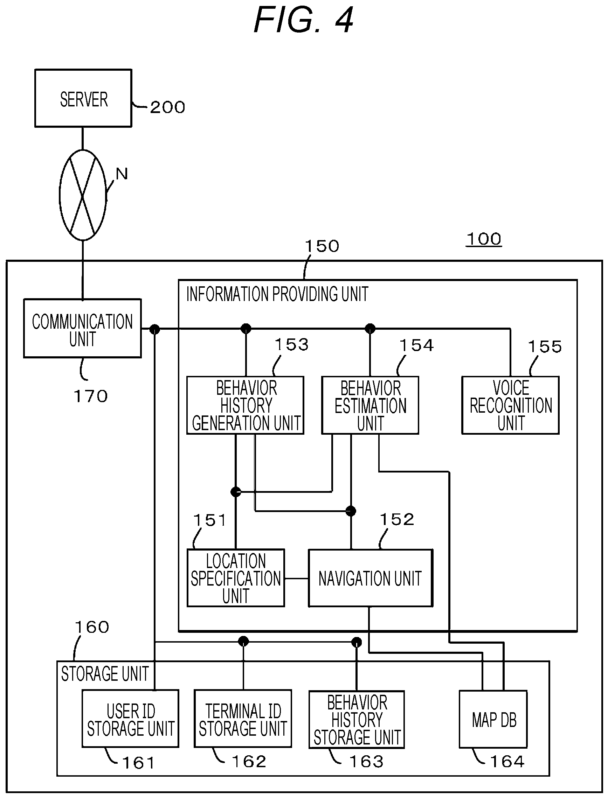

Next, a functional configuration of the on-board terminal 100 will be described. FIG. 4 is a functional block diagram showing an example of the functional configuration of the on-board terminal 100. The on-board terminal 100 includes an information providing unit 150, a storage unit 160, and a communication unit 170. Further, the information providing unit 150 includes a location specification unit 151, a navigation unit 152, a behavior history generation unit 153, a behavior estimation unit 154, and a voice recognition unit 155.

The location specification unit 151 is a functional unit to specify a vehicle location. For example, the location specification unit 151 uses a vehicle location calculated by the positioning sensor 105, map information stored in the storage unit 160, and vehicle state information acquired via the on-board network and the vehicle signal line, to specify a current location of the vehicle on the map and a vehicle direction periodically (e.g., every 1 second).

The navigation unit 152 is a functional unit to perform a predetermined process related to the navigation function. For example, the navigation unit 152 superimposes a car mark indicating the current location of the vehicle on the map and displays on the display device 102. Further, the navigation unit 152 searches for a recommended route connecting a departure place and a destination of an input received from the user. Further, the navigation unit 152 uses the vehicle location, the map information, and the vehicle state information acquired via the on-board network or the vehicle signal line, to perform processing for realizing a normal navigation function, such as route guidance of the vehicle, and display of map information and traffic information.

The behavior history generation unit 153 is a function unit to generate behavior history information. Specifically, the behavior history generation unit 153 acquires a user ID of a user who uses the on-board terminal 100 or a terminal ID of the on-board terminal 100, from a user ID storage unit or a terminal ID storage unit in the storage unit 160. In addition, the behavior history generation unit 153 acquires a point coordinate indicating a traveling locus of the traveling route of the vehicle from the location specification unit 151. Further, the behavior history generation unit 153 acquires a point coordinate and a name of a departure point and a departure date and time from the navigation unit 152. Furthermore, the behavior history generation unit 153 acquires vehicle state information on a gear position or the like via an on-board network or a vehicle signal line, for parking determination of the vehicle.

In addition, the behavior history generation unit 153 acquires, from the server 200, a search result (a destination name, a point coordinate, and the like) of the destination based on the user's response voice, and specifies the user's destination based on the search result. Further, the behavior history generation unit 153 generates behavior history information including the above information and the destination specified from the search result based on the user's response voice. Furthermore, the behavior history generation unit 153 transmits the generated behavior history information to the server 200 via the communication unit 170.

The behavior estimation unit 154 is a functional unit to estimate behavior of the user. Specifically, the behavior estimation unit 154 uses the past behavior history information acquired from the server 200, the point coordinate on a traveling route of the vehicle acquired from the location specification unit 151, the date and time and the point coordinates of the departure point and an arrival point acquired from the navigation unit 152, and the map information acquired from a map DB, to estimate the destination toward which the user is heading.

Note that the method of estimating the destination with use of the behavior history information is not particularly limited, and it is sufficient to use a known technique (e.g., Miyashita et al., "Map matching method for destination prediction car navigation system", Journal of Information Processing Society of Japan Vol. 50, No. 1, 75-86 (Jan 2009)).

For example, the behavior estimation unit 154 compares the traveling route from the departure point with a past travel history, estimates an arrival point having a high coincidence degree as the destination toward which the user is heading, and expresses as a probability of arrival at a point where the user has arrived in the past. This probability is calculated in consideration of the number of times of traveling on a road in the past on which the user is currently traveling, and the number of arrivals to each point where the user has arrived after passing through this road. In this calculation method, there is adopted an arithmetic expression that increases a probability of arrival from the current point to a point to which the user goes frequently. Using such an algorithm, the behavior estimation unit 154 obtains a point having a high probability of arrival from the current point, as an estimated destination.

In addition, the behavior estimation unit 154 provides the user with POI information of the estimated destination that has been obtained. Specifically, the behavior estimation unit 154 transmits an acquisition request for the POI information of the estimated destination to the server 200 via the communication unit 170. Further, upon acquiring the POI information of the estimated destination, the behavior estimation unit 154 outputs the POI information to the navigation unit 152 and instructs display of the POI information.

The voice recognition unit 155 is a functional unit to perform processing for realizing the voice recognition function. Specifically, the voice recognition unit 155 performs voice synthesis on a speech sentence for asking the user about the destination, and outputs the speech sentence from the speaker 110. Further, the voice recognition unit 155 converts the response voice of the user inputted from the microphone 109 into character information, and recognizes speech contents of the user.

The storage unit 160 has a user ID storage unit 161, a terminal ID storage unit 162, a behavior history storage unit 163, and a map DB 164. The user ID storage unit 161 stores user ID information in which a user ID and a password to be used for user authentication of the server 200 are stored. The terminal ID storage unit 162 stores terminal ID information in which a terminal ID and a password to be used for terminal authentication of the server 200 are stored.

The behavior history storage unit 163 stores behavior history information acquired from the server 200. Details of the behavior history information will be described later.

The map DB 164 stores map information including information (link information) on links constituting roads on the map.

The communication unit 170 is a functional unit to perform information communication between with an external device (in the present embodiment, the server 200 or the like). For example, the communication unit 170 transmits behavior history information generated by the behavior history generation unit 153 to the server 200, and receives behavior history information corresponding to each on-board terminal 100 from the server 200.

The functional configuration of the on-board terminal 100 has been described above.

Meanwhile, the information providing unit 150 of the on-board terminal 100 is realized by a program that causes the CPU to perform processing. Each of these programs is stored in the ROM 115 and the auxiliary storage device 104, loaded into the RAM 116 upon execution of the program, and executed by the CPU 114. Further, the storage unit 160 of the on-board terminal 100 is realized by the ROM 115, the RAM 116, and the auxiliary storage device 104. Furthermore, the communication unit 107 of the on-board terminal 100 is realized by the communication device 112 and the inter-device communication device 111 or the communication terminal C.

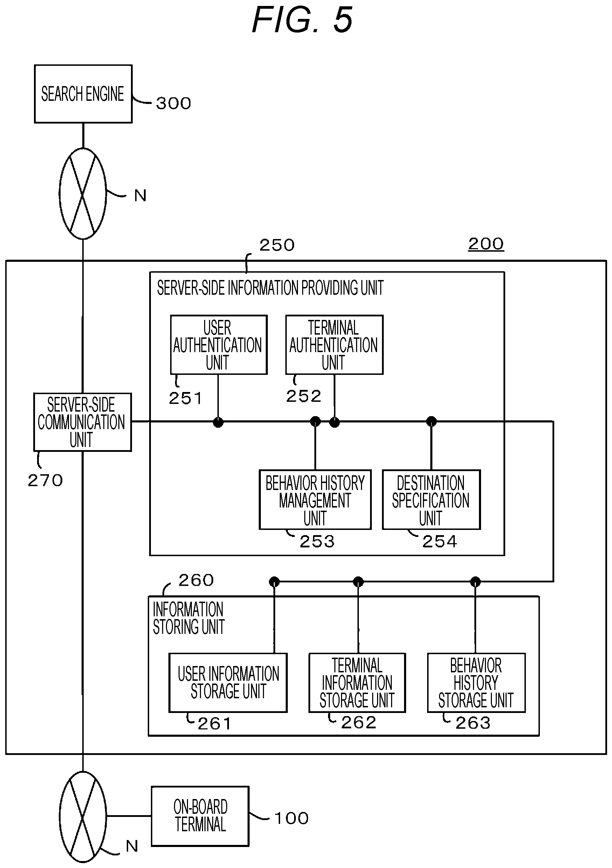

FIG. 5 is a functional block diagram showing an example of a functional configuration of the server 200. The server 200 has a server-side information providing unit 250, an information storing unit 260, and a server-side communication unit 270. In addition, the server-side information providing unit 250 includes a user authentication unit 251, a terminal authentication unit 252, a behavior history management unit 253, and a destination specification unit 254.

The user authentication unit 251 is a functional unit to perform user authentication. Specifically, the user authentication unit 251 uses user information stored in the information storing unit 260, to authenticate the user ID and the password included in the user ID information acquired from the on-board terminal 100.

The terminal authentication unit 252 is a functional unit to perform terminal authentication. Specifically, the terminal authentication unit 252 uses terminal information stored in the information storing unit 260, to authenticate the terminal ID and the password included in the terminal ID information acquired from the on-board terminal 100.

The behavior history management unit 253 is a functional unit to manage behavior history information. Specifically, the behavior history management unit 253 stores behavior history information acquired from the on-board terminal 100 in the information storing unit 260 in association with the on-board terminal ID for each user.

The destination specification unit 254 is a functional unit to perform an acquisition request to the search engine 300 for the POI information. Further, the destination specification unit 254 performs a search request to the search engine 300 for a destination.

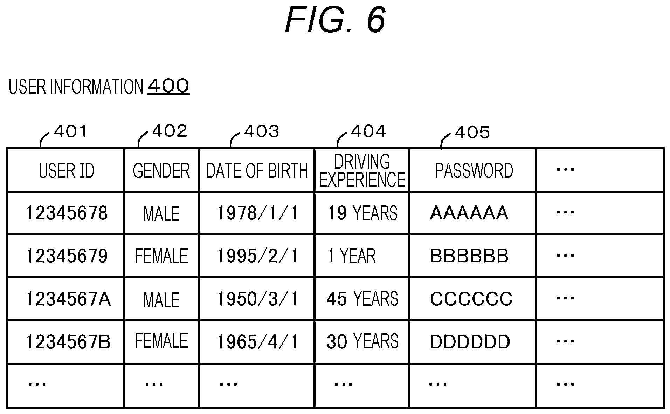

The information storing unit 260 has a user information storage unit 261, a terminal information storage unit 262, and a behavior history storage unit 263. FIG. 6 is a view showing an example of user information 400 stored in the user information storage unit 261. The user information 400 includes information on a user who uses the on-board terminal 100 of each vehicle. Specifically, the user information 400 has a record in which a user ID 401, a gender 402, a date of birth 403, a driving experience 404, and a password 405 are associated with each other.

The user ID 401 is information for uniquely identifying the user who uses the on-board terminal 100. The gender 402 is information indicating the gender of the user. The date of birth 403 is information indicating a date of birth of the user. The driving experience 404 is information indicating the driving experience of the user. The password 405 is password information to be used for user authentication. Meanwhile, the gender, the date of birth, and the driving experience may be used as information for identifying the specification of the user, for example, for classification of the user, trend analysis of the behavior history for each classification, and the like.

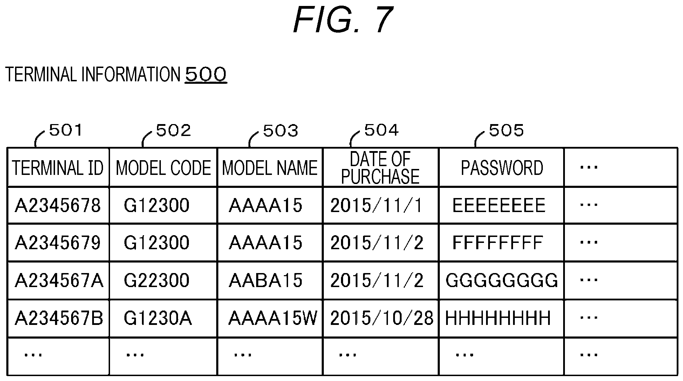

FIG. 7 is a view showing an example of terminal information 500 stored in the terminal information storage unit 262. The terminal information 500 includes information on the on-board terminal 100 mounted on each vehicle. Specifically, the terminal information 500 has a record in which a terminal ID 501, a model code 502, a model name 503, a date of purchase 504, and a password 505 are associated with each other.

The terminal ID 501 is information for uniquely identifying the on-board terminal 100. The model code 502 is code information for specifying the model of the on-board terminal 100. The model name 503 is information indicating the model of the on-board terminal 100. The date of purchase 504 is information indicating a date of purchase of the on-board terminal 100 or a date of installation on the vehicle. The password 505 is password information to be used for terminal authentication.

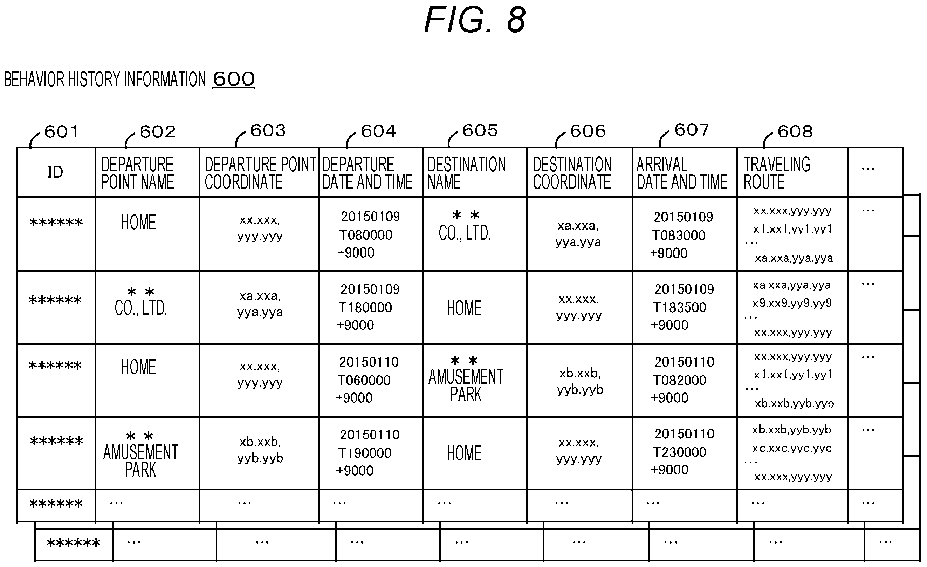

FIG. 8 is a view showing an example of behavior history information 600 stored in the behavior history storage unit 263. The behavior history information 600 includes information on a behavior history such as a destination of the user and a traveling route indicating a traveling locus of the vehicle. Specifically, the behavior history information 600 has a record in which an ID 601, a departure point name 602, a departure point coordinate 603, a departure date and time 604, a destination name 605, a destination coordinate 606, an arrival date and time 607, a traveling route 608 are associated with each other.

The ID 601 is information for uniquely identifying a user who uses the on-board terminal 100 or the on-board terminal. Specifically, in the behavior history information 600, identification information in common with the user ID 401 of the user information 400 or the terminal ID 501 of the terminal information 500 is registered. Meanwhile, the ID 601 may be registered with identification information in common with the user ID 401, or identification information in common with the terminal ID 501. The departure point name 602 is information indicating a name of a departure point (e.g., a name of a facility or the like). The departure point coordinate 603 is information indicating a point coordinate of the departure point on the map. The departure date and time 604 is information indicating a date and time of departing from the departure point. The destination name 605 is information indicating a name (e.g., a name of a facility or the like) of a destination specified from a search result based on the user's response voice. The destination coordinate 606 is information indicating a point coordinate of the destination. The arrival date and time 607 is information indicating a date and time at a time of arriving at the destination. The traveling route 608 is a list of a point coordinate indicating a vehicle location on the map calculated periodically (e.g., every second) by the location specification unit 151, and is information indicating a traveling locus of the vehicle.

The server-side communication unit 270 is a functional unit to perform information communication between with an external device (in the present embodiment, the on-board terminal 100, the communication terminal C, the search engine 300, and the like). For example, the server-side communication unit 270 acquires the behavior history information 600 from the on-board terminal 100. In addition, the server-side communication unit 270 acquires POI information and a search result of the destination from the search engine 300, and transmits those to the on-board terminal 100.

The functional configuration of the server 200 has been described above.

Meanwhile, the server-side information providing unit 250 is realized by a program that causes the CPU 204 to perform processing. Each of these programs is stored in the ROM 206 and the auxiliary storage device 202, loaded into the RAM 205 upon execution of the program, and executed by the CPU 204. Further, the information storing unit 260 is realized by the ROM 206, the RAM 205, and the auxiliary storage device 202. Furthermore, the server-side communication unit 270 is realized by the communication device 203.

In addition, each function block of the on-board terminal 100 and the server 200 has been classified according to main processing contents for easy understanding of the functions realized in the present embodiment, but the present invention is not limited by the way of classifying each function and its name. Further, each configuration of the on-board terminal 100 and the server 200 can also be classified into more components in accordance with the processing contents. In addition, categorization can be made such that one component performs more processing.

### [Description of Operation]

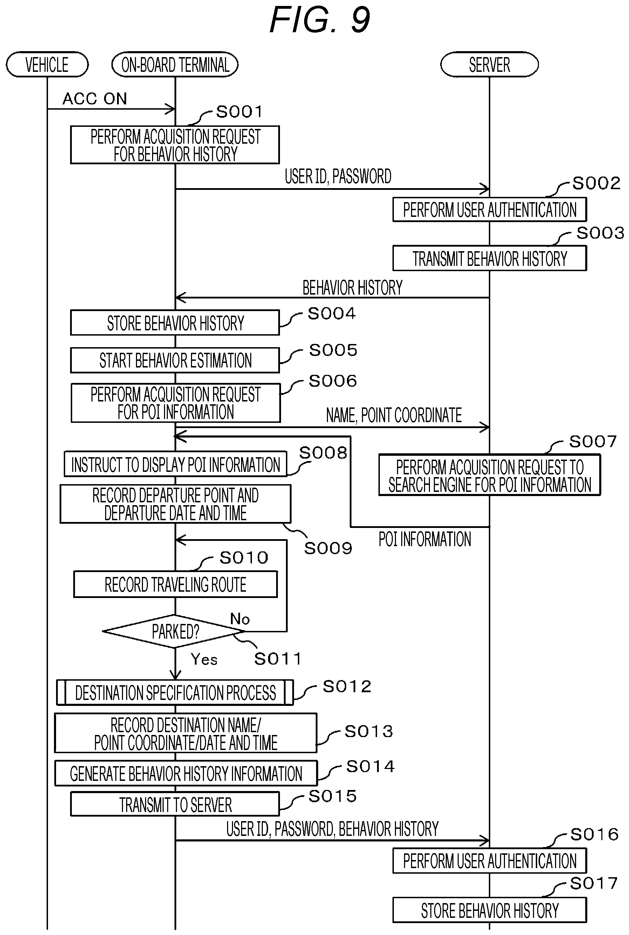

Next, a behavior history generation process and a destination specification process to be performed by the information providing system according to the present embodiment will be described. FIG. 9 is a sequence diagram showing an example of the behavior history generation process.

As shown in the figure, when a vehicle's accessory key (ACC) is turned ON, the behavior estimation unit 154 of the on-board terminal 100 transmits an acquisition request for the behavior history information 600 together with the user ID information and the password to the server 200 (step S001) .

Upon acquiring the user ID information and the password from the on-board terminal 100, the user authentication unit 251 of the server 200 performs user authentication (step S002). Further, upon receiving an acquisition request for the behavior history information 600 from the on-board terminal 100, the behavior history management unit 253 of the server 200 extracts the behavior history information 600 registered with the user ID acquired from the on-board terminal 100 from the behavior history storage unit 263, and transmit to the on-board terminal 100 via the server-side communication unit 270. (Step S003).

Upon acquiring the behavior history information 600 from the server 200, the behavior estimation unit 154 of the on-board terminal 100 saves the behavior history information 600 in the behavior history storage unit 163 (step S004), and starts a behavior estimation process (step S005). Specifically, the behavior estimation unit 154 estimates the destination that the user is heading, based on a coincidence degree of a point coordinate of the departure point, the departure date and time, and a point coordinate indicating the vehicle location acquired from the location specification unit 151 during traveling, with the contents included in the behavior history information 600 in the behavior history storage unit 163. In addition, the behavior estimation unit 154 specifies the name and the point coordinate of the estimated destination from the behavior history information 600, and transmits, to the server 200, an acquisition request for POI information of the estimated destination together with such information (step S006).

Upon receiving the acquisition request for the name and the point coordinate of the estimated destination and the POI information from the on-board terminal 100, the destination specification unit 254 of the server 200 performs the acquisition request to the search engine 300 for POI information (step S007). Further, upon acquiring the POI information of the estimated destination through the search engine 300, the destination specification unit 254 of the server 200 transmits the POI information to the on-board terminal 100 via the server-side communication unit 270.

Upon acquiring the POI information, the behavior estimation unit 154 of the on-board terminal 100 outputs a display instruction of the POI information to the navigation unit 152 (step S008).

Through such a series of processes, even when the user does not set the destination, the on-board terminal 100 estimates the destination from the past behavior history, and the POI information of the estimated destination is provided to the user. Meanwhile, the behavior estimation unit 154 may inquire of the navigation unit 152 whether or not an input of a destination is received from the user before estimating the destination. Further, when the navigation unit 152 has received an input of a destination from the user, the behavior estimation unit 154 may transmit an acquisition request to the server 200 for the POI information of the destination.

Further, when the vehicle starts traveling, the behavior history generation unit 153 of the on-board terminal 100 records predetermined information such as a point coordinate of the departure point and a departure date and time (step S009). In addition, while the vehicle is traveling, the behavior history generation unit 153 records a point coordinate indicating a vehicle location calculated periodically as a traveling locus of a traveling route (step S010).

Further, the behavior history generation unit 153 determines whether or not the vehicle is parked at a predetermined timing (e.g., every one second) (step S011). For example, the behavior history generation unit 153 determines parking of the vehicle based on whether or not a predetermined condition such as whether a gear position has been shifted to parking (P) via rear (R), or whether or not a side brake is applied is satisfied. Then, when it is determined that the vehicle is not parked (No in step S011), the behavior history generation unit 153 returns the processing to step S010. Whereas, when it is determined that the vehicle is parked (Yes in step S011), the behavior history generation unit 153 executes the destination specification process (step S012).

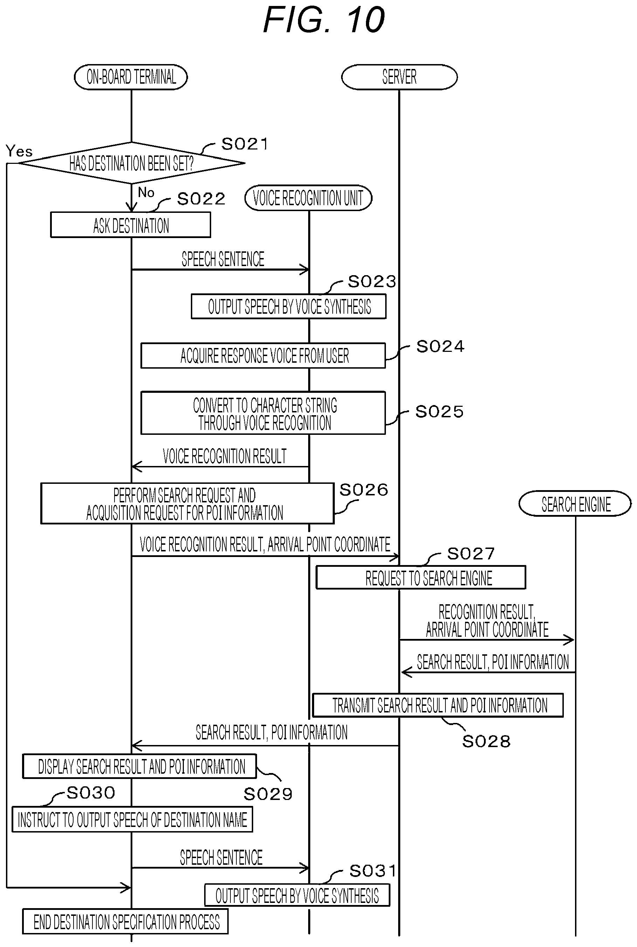

FIG. 10 is a sequence diagram showing an example of the destination specification process. When the destination specification process is started, the behavior history generation unit 153 determines whether or not a destination has been set (step S021) . Specifically, the behavior history generation unit 153 inquires of the navigation unit 152 whether or not an input of a destination has been received from the user. When the navigation unit 152 has received an input of a destination (Yes in step S021), the behavior history generation unit 153 ends the destination specification process and shifts the processing to step S013 in FIG. 9.

Whereas, when the navigation unit 152 has not received an input of a destination (No in step S021), the behavior history generation unit 153 shifts the processing to step S022.

In step S022, the voice recognition unit 155 asks the user about the destination. Specifically, the voice recognition unit 155 performs voice synthesis of a speech sentence such as "where would you like to go?", and outputs the speech sentence from the speaker 110 (step S023). Meanwhile, the speech sentence is not particularly limited, and any speech sentence may be used as long as it has contents to ask the user about the destination.

Next, the voice recognition unit 155 acquires a response voice from the user via the microphone 109 (step S024). For example, the voice recognition unit 155 acquires a user's response voice such as "** SUSHI", converts the response voice to character string information (character information) (step S025), and recognizes speech contents of the user. Further, the voice recognition unit 155 outputs a voice recognition result to the behavior history generation unit 153.

Next, the behavior history generation unit 153 transmits a search request for a destination and an acquisition request for POI information to the server 200 (step S026). Specifically, the behavior history generation unit 153 transmits the search request for a destination and the acquisition request for POI information to the server 200 together with the destination indicated by the voice recognition result and a point coordinate of an arrival point (parking spot) .

Upon receiving the destination indicated by the voice recognition result, the point coordinate of the arrival point, the search request for the destination, and the acquisition request for the POI information from the on-board terminal 100, the destination specification unit 254 of the server 200 performs a search request for the destination and an acquisition request for the POI information to the search engine 300 (step S027). Further, upon acquiring the search result of the destination and the POI information from the search engine 300, the destination specification unit 254 transmits those to the on-board terminal 100 via the server-side communication unit 270 (step S028).

Meanwhile, upon acquiring the destination indicated by the voice recognition result and the point coordinate of the arrival point from the server 200, the search engine 300 searches for the destination with use of the destination and the point coordinate. Specifically, the search engine 300 performs a search with use of the destination based on the user's response voice and the point coordinate of the arrival point, and obtains a detailed search result of the destination such as "** SUSHI Omiya branch", for example. In addition, the search engine 300 acquires POI information (e.g., business hours of a shop, average budget, recommended items, reputation, and the like) relating to "** SUSHI Omiya branch" as a search result.

Upon acquiring the POI information from the server 200, the behavior history generation unit 153 instructs the navigation unit 152 to display the POI information (step S029). In addition, upon acquiring the search result, the behavior history generation unit 153 instructs the voice recognition unit 155 to perform voice synthesis on the destination name of the search result, and output the destination name (step S030).

Upon receiving the instruction from the behavior history generation unit 153, the voice recognition unit 155 performs voice synthesis on the search result of the destination, and outputs from the speaker 110 (step S031). For example, the voice recognition unit 155 performs voice synthesis on a speech sentence such as "OK, you would like to go to ** SUSHI Omiya branch" by voice synthesis, and outputs the speech sentence from the speaker 110. Further, upon completion of such processing, the voice recognition unit 155 ends the destination specification process and shifts the processing to step S013 in FIG. 9.

In step S013, the behavior history generation unit 153 stores the name of the destination, the point coordinate, and the arrival date and time that are search results. In addition, the behavior history generation unit 153 generates the behavior history information 600 including the user ID, the names and the point coordinates of the departure point and the destination, the departure date and time, the arrival date and time, and a point coordinate indicating a traveling route (step S014). In addition, the behavior history generation unit 153 transmits the behavior history information 600 together with the user ID information and the password to the server 200 (step S015).

The user authentication unit 251 of the server 200 performs user authentication with use of the acquired user ID information and password (step S016). Further, when the authentication succeeds, the behavior history management unit 253 stores the acquired behavior history information 600 in the behavior history storage unit 263 (step S017).

The behavior history generation process and the destination specification process according to the present embodiment have been described above. According to such the invention, it is possible to generate history information for performing destination estimation with higher accuracy. In particular, since the on-board terminal 100 generates the behavior history information 600 including the destination asked to the user and estimates the destination with use of the behavior history information 600, the on-board terminal 100 can accurately estimate the destination even in a situation where the destination has not been set.

In addition, since the on-board terminal 100 specifies the destination based on the search result by the search engine 300, the on-board terminal 100 can more certainly specify the correct destination. Usually, even in a case of asking the user about a destination, a response of the user is often a nickname or abbreviation of a shop. Therefore, by passing through the search engine 300 that absorbs ambiguity such as of a nickname or abbreviation and enables a search of a destination with higher accuracy, the destination can be specified with high accuracy. Further, by utilizing the behavior history information 600 including the destination specified by such a search result, accurate destination estimation can be performed.

Further, the destination specified by the on-board terminal 100 is not a place where the vehicle is to be parked but a point such as a shop or a facility where the user actually goes. For example, in rural areas and suburbs, there are many places where a parking lot and a shop are very far apart. Therefore, when history information is generated with an arrival point of the vehicle as the destination, that is, a parking place as the destination, and the destination is estimated using such history information, the on-board terminal 100 will guide the user to the place far away from the target shop as the destination. In addition, there may be a problem that the on-board terminal 100 guides POI information, to the user, of a shop closer to the parking lot rather than the target shop far from the parking lot. On the other hand, in the information providing system according to the present embodiment, since the destination is estimated with use of the history information registered with a point such as a shop toward which the user is headed as the destination, it is possible to guide the user more accurately and provide more appropriate POI information to the user.

### <Second Embodiment>

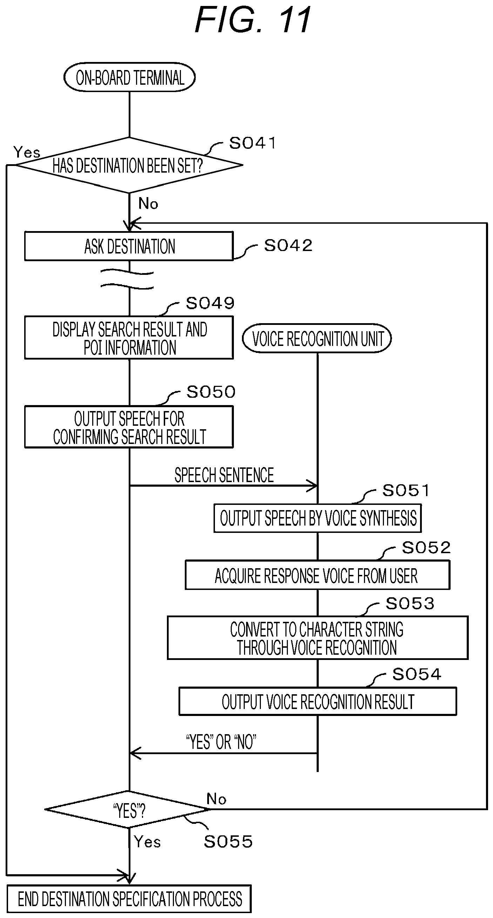

FIG. 11 is a sequence diagram showing an example of a destination specification process according to a second embodiment. In the destination specification process according to the first embodiment described above, a speech sentence that repeats the destination name of the search result based on the user's response voice is outputted (step S031). However, in the present embodiment, a speech sentence for confirming to a user whether or not a name of a destination of a search result is correct is outputted. It should be noted that, since processing from step S041 to step S049 according to the present embodiment is the same as processing from step S021 to step S029 in the first embodiment, the description will be omitted. Further, also in the present embodiment, it is assumed that the behavior history generation process shown in FIG. 9 is executed.

In step S049, a behavior history generation unit 153 instructs a navigation unit 152 to display a search result and POI information, and instructs a voice recognition unit 155 to output a speech sentence for confirming the search result to the user (step S050).

Upon receiving such an instruction, the voice recognition unit 155 performs voice synthesis and outputs the speech sentence for confirming to the user whether or not the destination of the search result is correct (step S051). For example, the voice recognition unit 155 performs voice synthesis on a speech sentence for confirmation such as "would you like to go to ** SUSHI Omiya branch?" and outputs the speech sentence from the speaker 110. Meanwhile, the speech sentence is not particularly limited, and any speech sentence may be used as long as it has contents to confirm the destination of the search result to the user.

Next, the voice recognition unit 155 acquires a response voice from the user via the microphone 109 (step S052) . For example, "Yes" or "No" or a similar response voice is acquired from the user. In addition, the voice recognition unit 155 converts the response voice into character string information (character information) (step S053) and recognizes speech contents of the user. Further, the voice recognition unit 155 outputs the voice recognition result to the behavior history generation unit 153 (step S054).

Next, the behavior history generation unit 153 determines whether or not the voice recognition result is "Yes" or similar speech contents (step S055). Then, when it is not "Yes" or similar speech contents (No in step S055), the behavior history generation unit 153 returns the processing to step S042, and a question is asked again to the user about the destination.

Whereas, when it is "Yes" or similar speech contents (Yes in step S055), the behavior history generation unit 153 ends the destination specification process and shifts the processing to step S013 in FIG. 9.

According to such a destination specification process according to the second embodiment, it is possible to prevent generation of the behavior history information 600 in which an erroneous destination is registered, by confirming the destination relating to the search result to the user.

### <Third Embodiment>

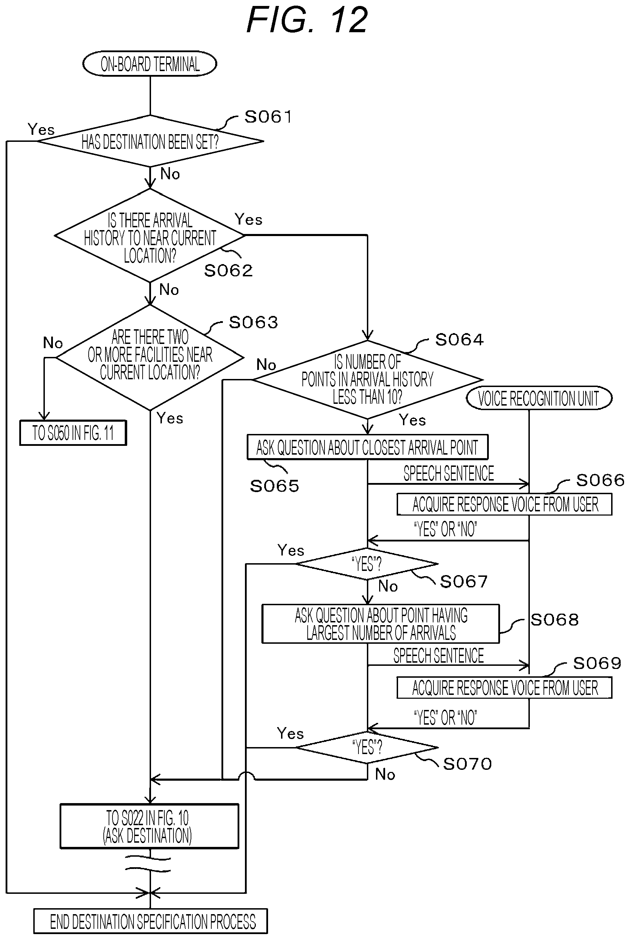

FIG. 12 is a sequence diagram showing an example of a destination specification process according to a third embodiment. In the destination specification process according to the present embodiment, contents asked to the user regarding the destination are changed according to the presence or absence of an arrival history to near a current location and the number of facilities near the current location. It should be noted that, also in the present embodiment, it is assumed that the behavior history generation process shown in FIG. 9 is executed.

In the processing of step S061, a navigation unit 152 determines whether or not a destination has been set. Specifically, the navigation unit 152 determines whether or not an input of a destination is received from the user. Then, when an input of a destination has been received (YES in step S061), a behavior history generation unit 153 ends the destination specification process, and shifts the processing to step S013 of FIG. 9.

Whereas, when an input of a destination from the user has not been received (No in step S061), the behavior history generation unit 153 uses behavior history information 600 to determine whether or not there is an arrival history to near the current location (e.g., in a predetermined radius from a parked point: for example, within a range of 50 m) (step S062). Then, when it is determined that there is no arrival history (No in step S062), the behavior history generation unit 153 determines whether or not there are two or more POIs such as a facility near the current location (step S063). Then, when it is determined that there are not two or more facilities (No in step S063), the behavior history generation unit 153 shifts the processing to step S050 in FIG. 11. That is, since one facility near the current location can be specified although there is no past arrival history, the behavior history generation unit 153 instructs a voice recognition unit 155 to output a speech sentence for confirming the destination according to the specification result to the user (step S050).

Whereas, when it is determined that there are two or more facilities near the current location, the behavior history generation unit 153 shifts the processing to step S022 in FIG. 10, and causes the voice recognition unit 155 to output a speech sentence for asking the user about the destination (e.g., "where would you like to go?" and the like). This is because there is no past behavior history to near the current location, and there are a plurality of facilities near the current location, so that one facility cannot be specified.

Further, when it is determined in step S062 that there is an arrival history to near the current location (Yes in step S062), the behavior history generation unit 153 determines whether or not the number of points in the arrival history (e.g., the number of points such as facilities and parks) is less than 10 (step S064). Then, when the number of points is not less than 10 (No in step S064), the behavior history generation unit 153 shifts the processing to step S022 in FIG. 10, and asks the user about the destination via the voice recognition unit 155. This is because the estimation of the destination toward which the user is headed is difficult as the number of points is 10 or more although there are past arrival histories. Meanwhile, the number of points is not particularly limited, and any number may be set as appropriate.

Whereas, when the number of points in the arrival history is less than 10 (Yes in step S064), the behavior history generation unit 153 specifies a past arrival point closest to the current location from the behavior history information 600. Further, the voice recognition unit 155 generates a speech sentence by voice synthesis for asking the user whether such an arrival point is the current destination, and outputs the speech sentence from a speaker 110 (step S065).

Next, the voice recognition unit 155 acquires a response voice from the user via a microphone 109 (step S066) . For example, the voice recognition unit 155 acquires "Yes" or "No" or a similar response voice from the user. In addition, the voice recognition unit 155 converts the response voice into character string information (character information) and recognizes speech contents of the user. Further, the voice recognition unit 155 outputs a voice recognition result to the behavior history generation unit 153.

Next, the behavior history generation unit 153 determines whether or not the voice recognition result is "Yes" or similar speech contents (step S067). Then, when it is determined to be "Yes" or similar speech contents (Yes in step S067), the behavior history generation unit 153 ends the destination specification process. This is because one destination has been identified.

Whereas, when it is not "Yes" or similar speech contents (No in step S067), the behavior history generation unit 153 specifies a past arrival point having a largest number of arrivals from the current location, from the behavior history information 600. In addition, the voice recognition unit 155 generates a speech sentence by voice synthesis for asking the user whether such an arrival point is the current destination, and outputs the speech sentence from the speaker 110 (step S068).

Next, the voice recognition unit 155 acquires a response voice from the user via the microphone 109 (step S069). For example, the voice recognition unit 155 acquires "Yes" or "No" or a similar response voice from the user. In addition, the voice recognition unit 155 converts the response voice into character string information (character information) and recognizes speech contents of the user. Further, the voice recognition unit 155 outputs a voice recognition result to the behavior history generation unit 153.

Next, the behavior history generation unit 153 determines whether or not the voice recognition result is "Yes" or similar speech contents (step S070). Then, when it is "Yes" or similar speech contents (Yes in step S070), the behavior history generation unit 153 ends the destination specification process.

Whereas, when it is not "Yes" or similar speech contents (No in step S070), the behavior history generation unit 153 shifts the processing to step S022 of FIG. 10, and asks the user about the destination via the voice recognition unit 155. This is because the destination cannot be specified although there is a past arrival history.

According to the destination specification process according to the third embodiment as described above, since contents asked to the user regarding the destination are changed according to the presence or absence of an arrival history to near the current location and the number of facilities near the current location, it is possible to reduce the number of questions as much as possible and reduce troublesomeness of the user responding to a question.

### <Fourth Embodiment>

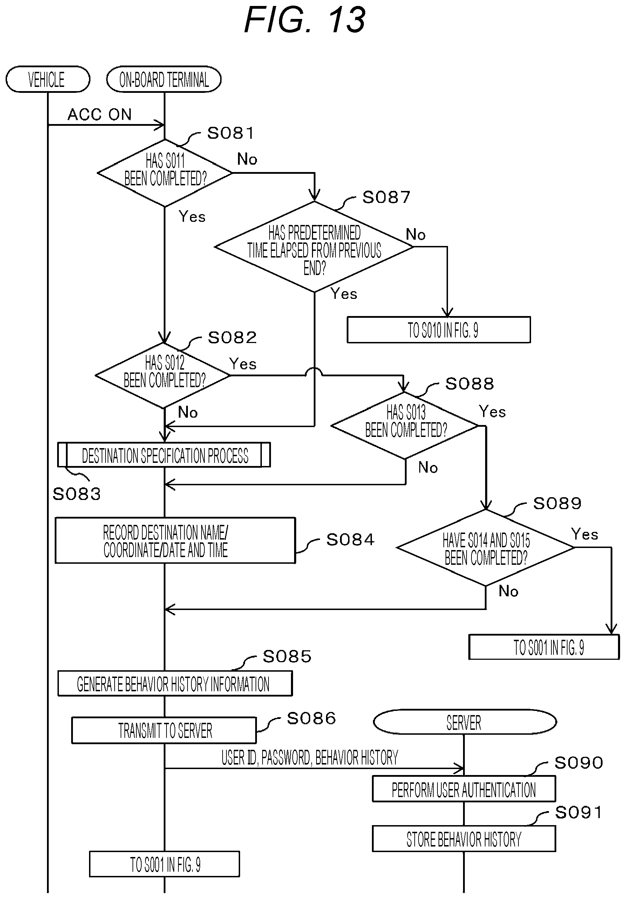

FIG. 13 is a sequence diagram showing an example of a behavior history generation restart process according to a fourth embodiment. In the first embodiment described above, for example, the engine of the vehicle may be stopped during processing such as the parking determination (step S011). The behavior history generation restart process according to the present embodiment is a process to be executed when the behavior history generation process is ended during processing and the on-board terminal 100 is subsequently activated. It should be noted that, since steps S083 to S091 are similar to the processing of step S012 to step S017 of FIG. 9, the description thereof will be omitted.

When an accessory key (ACC) of a vehicle is turned ON, a behavior history generation unit 153 determines whether or not processing of step S011 (parking determination) in FIG. 9 has been completed (step S081). When it is determined that the processing has not been completed (No in step S081), the behavior history generation unit 153 determines whether or not a predetermined time (e.g., five minutes) has elapsed from a previous end (step S087) . Then, when it is determined that the predetermined time has elapsed (Yes in step S087), the behavior history generation unit 153 shifts the processing to step S083 and executes a destination specification process.

Whereas, when it is determined that the predetermined time has not elapsed (No in step S087), the behavior history generation unit 153 shifts the processing to step S010 in FIG. 9, and records a traveling route. When the predetermined time has elapsed since the previous end, there is a possibility that the user has completed some requirement. In such a case, an arrival point at the previous end is assumed as the destination, and the destination specification process is performed.

In addition, when it is determined in step S081 that the parking determination in step S011 has been completed (Yes in step S081), the behavior history generation unit 153 determines whether or not the step S012 (destination specification process) in FIG. 9 has been completed (step S082) . When it is determined that the destination specification process has not been completed (No in step S082), the behavior history generation unit 153 performs the destination specification process in FIG. 10 (step S083).

Meanwhile, when the destination specification process is performed through step S081, the voice recognition unit 155 asks the user a question of a speech sentence "where have you been?" (step S022 and step S023 in FIG. 10). This is because, in this case, it is considered that the user has arrived at the destination at the previous end, and the user has already completed requirement s and the like.

Whereas, when it is determined that the destination specification process has been completed (Yes in step S082), the behavior history generation unit 153 determines whether or not the processing of step S013 (recording of a destination name, a point coordinate, and an arrival date and time) has been completed (step S088). Then, when it is determined that the destination specification process has not been completed (No in step S088), the behavior history generation unit 153 shifts the processing to step S084 and records these items.

Whereas, when it is determined that the recording of the destination name and the like has been completed (Yes in step S088), the behavior history generation unit 153 determines whether or not step S014 and step S015 (generation and transmission of behavior history information 600) of FIG. 9 have been completed (step S089). Then, when it is determined that the recording has not been completed (No in step S089), the behavior history generation unit 153 generates the behavior history information 600 (step S085), and transmits the behavior history information 600 to a server 200 together with a user ID and a password via a communication unit 170 (step S086).

Whereas, when it is determined that the generation of the behavior history information 600 and the transmission to the server 200 have been completed (Yes in step S089), a behavior estimation unit 154 shifts the processing to step S001 (acquisition request for the behavior history information 600) in FIG. 9.

By the processing according to the fourth embodiment described above, the behavior history generation process can be restarted from the processing that has been incomplete at the previous end. In particular, by determining whether or not a predetermined time has elapsed since the previous end, the on-board terminal 100 can determine whether the last behavior history generation process has ended upon arrival at the destination or has ended without arriving at the destination. This enables more accurate specification of processing to be restarted.

It should be noted that, in the present invention as described above, the behavior history generation process according to the first embodiment can be combined with the destination specification process according to the second embodiment or the destination specification process according to the third embodiment. Furthermore, the behavior history generation restart process according to the fourth embodiment can be executed before the behavior history generation process according to the first embodiment is executed. In addition, it is also possible to combine a behavior history generation process, which will be described later, for performing terminal authentication with use of a terminal ID.

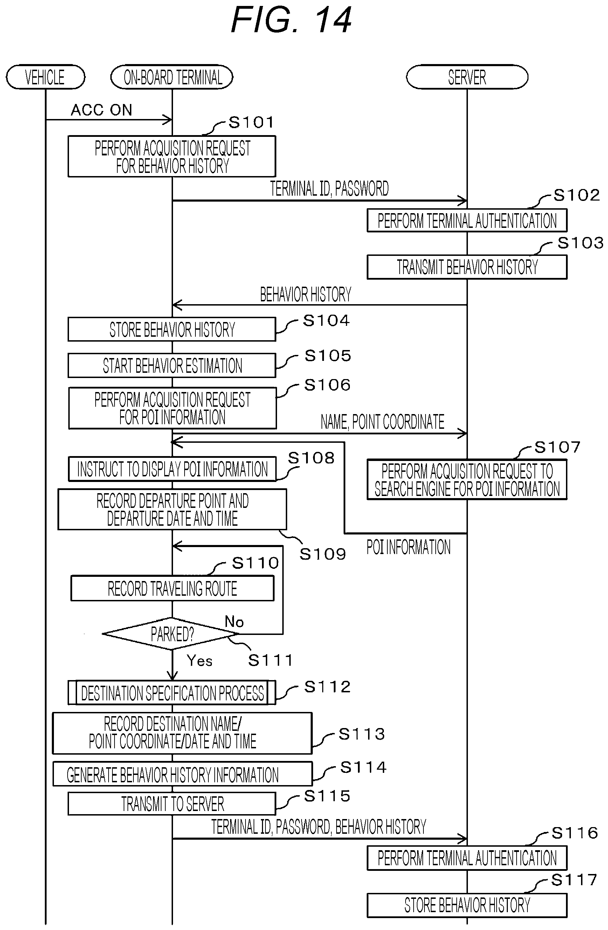

Further, in the above embodiment, the user authentication is performed using a user ID. However, the present invention may perform the terminal authentication using a terminal ID. FIG. 14 is a flowchart showing an example of a behavior history generation process for performing terminal authentication. As shown in the figure, the behavior estimation unit 154 of the on-board terminal 100 transmits an acquisition request to the server 200 for the behavior history information 600, together with terminal ID information and a password (step S101).

Upon acquiring the terminal ID information and the password from the on-board terminal 100, the terminal authentication unit 252 of the server 200 performs terminal authentication (step S102). Further, upon receiving an acquisition request for the behavior history information 600 from the on-board terminal 100, the behavior history management unit 253 of the server 200 extracts the behavior history information 600 registered with the terminal ID acquired from the on-board terminal 100 from the behavior history storage unit 263, and transmits to the on-board terminal 100 via the server-side communication unit 270. (Step S103).

Further, in step S115, the behavior history generation unit 153 transmits the behavior history information 600 to the server 200 together with the terminal ID information and the password.

The terminal authentication unit 252 of the server 200 performs terminal authentication with use of the acquired terminal ID information and password (step S116). Further, when the authentication succeeds, the behavior history management unit 253 stores the acquired behavior history information 600 in the behavior history storage unit 263 (step S117).

According to such a behavior history generation process, it is possible to manage the behavior history information in association with the on-board terminal 100, instead of the user who uses the on-board terminal 100.

Further, the present invention is not limited to the above embodiments, but may include various modifications. For example, the embodiments described above have been illustrated in detail to facilitate description for easy understanding of the present invention, and are not necessarily limited to the embodiments that include all the illustrated configurations. Additionally, a part of a configuration of an example may be replaced with a configuration of another example, and a configuration of an example may be added with a configuration of another example. Moreover, a part of a configuration of each embodiment may be deleted, replaced, added with another configuration.

Further, in the description above, control lines and information lines indicate what is considered to be necessary for the description, and do not necessarily indicate all the control lines and the information lines on the product. In practice, it can be considered that almost all the structures are mutually connected.

### Reference Signs List

- 100: information providing apparatus (on-board terminal)
- 200: server
- 300: search engine
- C: communication terminal
- N: communication network
- 150: information providing unit
- 151: location specification unit
- 152: navigation unit
- 153: behavior history generation unit
- 154: behavior estimation unit
- 155: voice recognition unit
- 160: storage unit
- 161: user ID storage unit
- 162: terminal ID storage unit
- 163: behavior history storage unit
- 164: map DB
- 170: communication unit
- 250: server-side information providing unit
- 251: user authentication unit
- 252: terminal authentication unit
- 253: behavior history management unit
- 254: destination specification unit
- 260: information storing unit
- 261: user information storage unit
- 262: terminal information storage unit
- 263: behavior history storage unit
- 270: server-side communication unit

## Claims

1. An information providing system comprising;
an information providing apparatus having
a voice recognition unit configured to output a speech sentence for asking a user about a destination and acquire a response voice of a user indicating the destination, and
an behavior history generation unit configured to perform a search request for a destination responded by a user and generate behavior history information including a destination specified based on a search result; and
a server having a destination specification unit configured to perform the search request acquired from the information providing apparatus to a search engine configured to perform an information search, and transmit a search result to the information providing apparatus.

2. The information providing system according to claim 1, wherein the behavior history generation unit
performs an acquisition request to the destination specification unit for POI information of the destination responded by a user, and
instructs display of the POI information acquired from the destination specification unit.

3. The information providing system according to claim 1,
further comprising a behavior estimation unit configured to estimate a destination of a user with use of the behavior history information in a past,
performs an acquisition request to the destination specification unit for POI information of an estimated destination, and
instructs display of the POI information acquired from the destination specification unit.

4. The information providing system according to claim 1,
wherein the voice recognition unit
outputs a speech sentence for confirming the destination indicated by the search result to a user; and
the behavior history generation unit
specifies the destination in accordance with a confirmation result, and
generates the behavior history information including the specified destination.

5. The information providing system according to claim 1,
wherein the behavior history generation unit
uses the behavior history information to determine presence or absence of an arrival history to near a current location where a vehicle is parked; and
the voice recognition unit
changes contents of a speech sentence for asking a user about a destination in accordance with a determination result.

6. The information providing system according to claim 5,
wherein the voice recognition unit
outputs a speech sentence for asking a user whether or not an arrival point closest to a current location where a vehicle is parked is a destination of a user when a number of arrival points with the arrival history is less than a predetermined number; and
outputs a speech sentence for asking a user whether or not an arrival point having a largest number of arrivals is a destination of a user when acquiring a response voice of a user indicating that an arrival point closest to near a current location is not a destination of a user.

7. The information providing system according to claim 1,
wherein, when the information providing apparatus is activated,
the behavior history generation unit
specifies processing that has not been completed by the information providing apparatus at a previous activation, and
executes the specified processing that has not been completed.

8. The information providing system according to claim 7,
wherein the behavior history generation unit
determines whether or not a predetermined period of time has elapsed from the end of the activation when the information providing apparatus has not completed parking determination of a vehicle at a previous activation;
causes the voice recognition unit to output a speech sentence for asking a user about a destination when it is determined that a predetermined time has elapsed;
performs processing of specifying a destination based on a search result of the search engine based on a response voice of a user; and
generates the behavior history information including a destination specified based on the search result.

9. The information providing system according to claim 7,
wherein the behavior history generation unit
causes the voice recognition unit to output a speech sentence for asking a user about a destination when the information providing apparatus has not completed processing of specifying a destination at a previous activation;
performs processing of specifying a destination with a search result of the search engine based on a response of a user; and
generates the behavior history information including a destination specified based on the search result.

10. The information providing system according to claim 1,
wherein the behavior history generation unit
generates the behavior history information associated with at least one of a user ID to identify the user or a terminal ID to identify the information providing apparatus; and
the server comprises
at least one of a user authentication unit configured to perform user authentication with use of the user ID or a terminal authentication unit configured to perform terminal authentication with use of the terminal ID, and
a behavior history management unit configured to transmit the behavior history information associated with the user ID or the terminal ID to the information providing apparatus when the user authentication or the terminal authentication succeeds.

11. The information providing system according to claim 3,
wherein the behavior estimation unit
estimates a destination of the user with use of the behavior history information when acquiring the behavior history information associated with at least one of a user ID to identify the user or a terminal ID to identify the information providing apparatus, from the server.

12. An information providing apparatus comprising:
a voice recognition unit configured to output a speech sentence for asking a user about a destination and acquire a response voice of a user indicating the destination; and
an behavior history generation unit configured to perform a search request to a server for a destination responded by a user and generate behavior history information including a destination specified based on a search result.

13. An information providing method comprising the steps of:
outputting a speech sentence for asking a user about a destination and acquiring a response voice of a user indicating the destination;
performing a search request for a destination responded by a user, to a search engine configured to perform an information search; and
generating behavior history information including a destination specified based on a search result.
